(19) Europäisches Patentamt
European Patent Office
Office européen des brevets

(11) EP 3 505 574 B1

(12) # EUROPEAN PATENT SPECIFICATION

(45) Date of publication and mention of the grant of the patent:
**12.05.2021 Bulletin 2021/19**

(51) Int Cl.:
***C09C 1/02*** *(2006.01)*

(21) Application number: **17306956.8**

(22) Date of filing: **28.12.2017**

(54) **AMPHIPHILIC COPOLYMERS AS SURFACE MODIFIERS FOR PRODUCTION OF IMPROVED CALCIUM CARBONATE POWDERS**

AMPHIPHILE COPOLYMERE ALS OBERFLÄCHENMODIFIZIERUNGSMITTEL ZUR HERSTELLUNG VON VERBESSERTEN CALCIUMCARBONATPULVERN

COPOLYMÈRES AMPHIPHILES COMME MODIFICATEURS DE SURFACE POUR LA PRODUCTION DE POUDRES DE CARBONATE DE CALCIUM AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.07.2019 Bulletin 2019/27**

(73) Proprietor: **Imerys USA, Inc.**
**Roswell, GA 30076 (US)**

(72) Inventors:
- **Singh, Virendra**
  **Cumming GA 30041 (US)**
- **Stovall, Kalena**
  **Atlanta, GA 30341 (US)**
- **Golbayani, Parvin**
  **Boston, MA 02135 (US)**
- **Perez, Richardo, M.**
  **Cumming Georgia 30041 (US)**
- **Taylor, David A**
  **Marietta Georgia 30062 (US)**
- **Paynter, Christopher D**
  **Atlanta Georgia 30318 (US)**
- **Wicks, Douglas**
  **Johns Creek Georgia 30022 (US)**
- **Fritzen, Petra**
  **47443 Moers (DE)**
- **Girard, Anaelle**
  **13280 Arles (FR)**

(74) Representative: **Haseltine Lake Kempner LLP**
**Redcliff Quay**
**120 Redcliff Street**
**Bristol BS1 6HU (GB)**

(56) References cited:
**WO-A1-2017/184952**
**WO-A1-2018/049310**
**US-A- 2 930 775**
**US-A- 4 151 336**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This application relates to materials technology in general and more specifically to a process for producing surface-modified calcium carbonates having improved properties. More particularly, this application discloses the preparation and use of surface-modified particles having a calcium carbonate core at least partially covered by an amphiphilic copolymer.

## BACKGROUND

Calcium carbonate ($CaCO_3$) is one of the most common and widely used minerals finding applications in various materials including rubbers, plastics, paints, papers, inks and even foods. Calcium carbonate particles come in many forms, such as precipitated calcium carbonate (PCC) and ground calcium carbonate (GCC). Modified versions of calcium carbonate are especially useful because the characteristics of this relatively-inexpensive mineral can be altered to replicate and replace other more expensive, rare or environmentally-unfriendly materials. In this context, much interest has been generated in the production and use of core-shell particles based on calcium carbonate as the core material, in which the shell of these core-shell particles is a functional surface coating.

The utility of surface-modified calcium carbonates can be greatly limited, however, due to the difficulty and expense in preparing them, as well as the challenges associated with adapting and tuning the characteristics of the functional surface coating for various difficult applications. The preparation of surface-modified calcium carbonates can limit their utility, because process steps such as drying and milling can be costly due to agglomeration and water-retention characteristics. Difficulties also arise in tuning the functional surface coating of surface-modified calcium carbonates to obtain optimal characteristics such as particle size distribution, surface area, moisture retention and oil-absorption. WO 2018/049310 relates to compositions comprising calcium carbonate, methods of preparation thereof, and methods of use thereof. US 2,930,775 relates to a pigment paste comprising an aqueous suspension of finely divided water-insoluble pigment and a polymeric dispersant consisting of a water-soluble salt selected from the group consisting of ammonium and alkali metal salts of a polymeric material selected from the group consisting of a relatively homogeneous copolymer of maleic anhydride and diisobutylene. WO 2017/184952 relates to inorganic particulate compositions containing inorganic particles associated with a copolymer of a hydrophilic monomer and a hydrophobic monomer associated with the inorganic particles are provided

## SUMMARY

The present inventors have recognized that a need exists to discover processes for efficiently preparing surface-modified calcium carbonates having optimal physical characteristics for specific applications. For example, a need exists to produce surface-modified calcium carbonates in large scale using a process in which the energy cost of performing critical steps such as drying and milling is reduced relative to known production methods. A need also exists to devise methods for producing surface-modified calcium carbonates whose physical characteristics can be fine-tuned for specific applications such as use in polymers, paints, coatings, sealants and color modifiers.

The following disclosure describes the preparation and use of surface-modified particles having a calcium carbonate core at least partially covered by an amphiphilic copolymer.

Embodiments of the present disclosure, described herein such that one of ordinary skill in this art can make and use them, include the following:

(1) Some embodiments relate to a process for producing a surface-modified calcium carbonate, the process comprising contacting a milk of lime comprising calcium hydroxide with at least one amphiphilic copolymer comprising hydrophilic subunits and hydrophobic subunits, wherein: (a) the hydrophilic subunits derive from at least one ethylenically-unsaturated compound comprising a carboxylic acid group or salt or derivative thereof; (b) the hydrophobic subunits derive from at least one ethylenically-unsaturated compound comprising a hydrophobic group; and (c) the amphiphilic copolymer has a hydrophilic-lipophilic balance (HLB) value ranging from about 1 to about 40;

(2) Some embodiments relate to a surface-modified calcium carbonate obtained by the process (1) above; and

(3) Some embodiments relate to a composition comprising the surface-modified calcium carbonate of (2), wherein the composition is selected from the group consisting of a polymer, a paint, a coating, a sealant and a color modifying agent.

Additional objects, advantages and other features of the present disclosure will be set forth in part in the description that follows and in part will become apparent to those having ordinary skill in the art upon examination of the

following or may be learned from the practice of the present disclosure. The present disclosure encompasses other and different embodiments from those specifically described below, and the details herein are capable of modifications in various respects without departing from the present disclosure. In this regard, the description herein is to be understood as illustrative in nature, and not as restrictive.

## BRIEF DESCRIPTION OF THE DRAWINGS

Embodiments of this disclosure are explained in the following description in view of figures that show:

**FIG. 1** is a bar chart showing the nitrogen BET surface areas of surface-modified calcium carbonate particles versus the percent amount of amphiphilic copolymer added to a pre-carbonation milk of lime during production of PCC particles;

**FIG. 2** is a bar chart showing the nitrogen BET surface areas of surface-modified calcium carbonate particles versus the percent amount of amphiphilic copolymer added to a post-carbonation suspension of during production of PCC particles;

**FIG. 3** is a graph tracing the nitrogen BET surface areas and moisture uptakes of surface-modified calcium carbonate particles versus the percent amount of amphiphilic copolymer added to a pre-carbonation milk of lime during production of PCC particles.

## DETAILED DESCRIPTION

Embodiments of this disclosure includes various processes for producing surface-modified calcium carbonates, as well as compositions relating to these processes.

The terms "about" and "approximately" as used herein refer to being nearly the same as a referenced amount or value, and should be understood to encompass $\pm$ 5% of the specified amount or value.

Some embodiments relate to a process for producing a surface-modified calcium carbonate. The process involves contacting a milk of lime comprising calcium hydroxide with at least one amphiphilic copolymer comprising hydrophilic subunits and hydrophobic subunits-in which the hydrophilic subunits derive from at least one ethylenically-unsaturated compound comprising a carboxylic acid group or salt or derivative thereof, and the hydrophobic subunits derive from at least one ethylenically-unsaturated compound comprising a hydrophobic group. In some embodiments, the amphiphilic copolymer has a hydrophilic-lipophilic balance value ranging from about 1 to about 40.

The process described above is advantageous, in part, because it allows the surface characteristics of the resulting surface-modified calcium carbonate to be fine-tuned for specific applications. The surface-modified products can be adapted for specific applications by modulating the characteristics of amphiphilic copolymer. The term "amphiphilic copolymer," as used herein, is intended to describe a copolymer having both hydrophilic (water loving) and lipophilic (oil loving) characteristics. In this disclosure the term "hydrophobic" is synonymous with the term "lipophilic." Thus, the amphiphilic copolymer includes both hydrophilic and hydrophobic components.

The surface characteristics of the surface-modified calcium carbonates can be adjusted by altering the identity and proportion of the hydrophilic and hydrophobic subunits contained in the amphiphilic copolymer. Changing the identity and proportion of the hydrophilic and hydrophobic subunits can dramatically alter not only the solubility characteristics of the amphiphilic copolymer, but can also dramatically affect both the structure (e.g., branching, crosslinking, etc.) of the amphiphilic copolymer and its ability to interact with, and bond to, the surface of calcium carbonate particles.

In designing the amphiphilic copolymers for particular applications, factors to consider in choosing the identity and proportion of the hydrophilic and hydrophobic subunits include not only the characteristics of the resulting functional surface coating, but also the solubility characteristics of the amphiphilic copolymer itself. As explained below in greater detail, the process of contacting the calcium carbonate (or precursor thereof) with the amphiphilic copolymer involves mixing a dispersion of these components. Thus, the ability to disperse the amphiphilic copolymer in a dispersion medium such as water is an important factor in processes of the present disclosure.

In some embodiments, the amphiphilic copolymer has a hydrophilic-lipophilic balance value ranging from about 1 to about 40. The "hydrophilic-lipophilic balance" (abbreviated herein as "HLB") is a measure of the degree to which a compound is hydrophilic or lipophilic, as determined for example by the methods Griffin and Davies which calculates values based on different regions of the molecule. See "Classification of Surface-Active Agents by 'HLB'," Journal of the Society of Cosmetic Chemists, 1949, 1(5), 311-27; "The HLB System, a Time Saving Guide to Emulsifier Selection," ICI Americas Inc., version 1980; Davies, J.P. & Rideal, E.K., "Interfacial Phenomena", 2nd ed., p. 371 (Academic Press, London, 1963); Lin, I.J. & Marszall, L., Tenside Det, 15, 243 (1978); and O Boen Ho, J. Colloid. Interface Sci., 198, 249 (1998).

HLB values may be calculated using different methods depending upon the nature of the amphiphilic copolymer. For non-ionic (non-deprotonated) amphiphilic copolymers, HLB values may be calculated using the Griffin formula below. For ionic (deprotonated) amphiphilic copolymer, HLB values may be calculated using the Davies formula below.

Griffin Formula

$$HLB = 20 \times MW_H / (MW_H + MW_L) = wt\%\ hydrophile / 5$$

$MW_H$ = mol. wt. of hydrophilic portion
$MW_L$ = mol. wt. of hydrophobic portion

Davies Formula

$$HLB = \sum (\text{Hydrophilic group contributions}) - \sum (\text{hydrophobic group contributions})$$

| group | contribution |
|---|---|
| -COO-Na+ | 19.1 |
| $-CH_3$ | 0.475 |
| $-CH_2-$ | 0.475 |
| -CH-<br>I | 0.475 |
| -CH= | 0.475 |
| $-CH_2-$ ø | 1.66 |
| $-CH_2-CH-O-$<br>\|<br>$CH_3$ | 0.15 |

In some embodiments, the amphiphilic copolymer may have an HLB value ranging from about 1 to about 40, or in some embodiments, from about 3 to about 28. In other embodiments the amphiphilic copolymer may have an HLB value ranging from about 1 to about 3, or from about 3 to about 6, or from about 7 to about 9, or from about 8 to about 28, or from about 11 to about 18, or from about 12 to about 15.

In processes of the present disclosure the amphiphilic copolymer is contacted with a precursor of calcium carbonate, which is milk of lime comprising calcium hydroxide. When the core of the surface-modified calcium carbonate is based on PCC, the process involves contacting the amphiphilic copolymer with a milk of lime comprising calcium hydroxide.

The ability to co-disperse the milk of lime comprising calcium hydroxide and the amphiphilic copolymer in a liquid medium is important in some embodiments of the present disclosure. For example, in some embodiments, the process includes the steps of contacting the amphiphilic copolymer with the milk of lime comprising calcium hydroxide, to obtain a dispersion of the surface-modified calcium carbonate, and then removing the liquid medium from the dispersion to obtain a powder of the surface-modified calcium carbonate. The milk of lime comprising calcium hydroxide may be contacted with an aqueous dispersion of the amphiphilic copolymer or a salt thereof, or it may be contacted with a non-aqueous dispersion.

The liquid medium may contain a single substance or a mixture of substances. For example, the liquid medium may contain a single solvent or a mixture of solvents. The solvent may be capable of completely or partially dissolving the amphiphilic copolymer and/or may be capable of completely or partially dispersing the amphiphilic copolymer. In some embodiments, the liquid medium may contain at least one solvent and at least one dispersing agent capable of promoting or enhancing dispersion of the amphiphilic copolymer and/or the milk of lime comprising calcium hydroxide in the at least one solvent. The dispersing agent may be, for example, a surfactant, a flocculent, a clarifying agent, a

detergent, an emulsifier, a wetting agent, a surface modifying agent, just to name a few, as well as other dispersing agents known in the art.

In some embodiments, the liquid medium may be an aqueous dispersing medium. An aqueous dispersing medium may include water, or a mixture of water and at least one organic solvent. The dispersing medium may also contain water, at least one organic solvent and at least one dispersing agent. In some embodiments, the dispersing medium is a homogeneous dispersing medium, while in other embodiments the dispersing medium is a heterogeneous dispersing medium.

The term "aqueous liquid" or "aqueous medium" as used herein describes a liquid containing water and at least one solvent. The term "solvent" as used herein means an organic solvent. For example, in some embodiments, the liquid medium may contain at least one solvent selected from water, an ether-containing solvent, an alcohol-containing solvent, an ester-containing solvent, a ketone-containing solvent, an aromatic hydrocarbon-containing solvent, an aliphatic hydrocarbon-containing solvent, a polar protic solvent, a polar aprotic solvent, and mixtures thereof, just to name a few. Solvents of the liquid medium may also be compounds of mixed character, such as aliphatic-aromatic compounds, alcohol-ester compounds, alcohol-ether compounds, to name a few. Solvents of the liquid medium may also be halogenated compounds such as halogenated aromatic compounds and halogenated aliphatic compounds.

In some embodiments, the liquid medium may include at least one solvent selected from acetone, acetonitrile, anisole, benzene, benzonitrile, benzyl alcohol, 1,3-butanediol, 2-butanone, tert-butanol, 1-butanol, 2-butanol, 2-(2-butoxyethoxy)ethyl acetate, 2-butoxyethyl acetate, butyl acetate, tert-butyl aceto acetate, tert-butyl methyl ether, carbon disulfide, carbon tetrachloride, chlorobenzene, 1-chlorobutane, chloroform, cyclohexane, cyclopentane, cyclopentyl methyl ether, decane, dibutyl ether, 1,2-dichlorobenzene, 1,2-dichloroethane, dichloromethane, diethyl ether, diethylene glycol butyl ether, diethylene glycol diethyl ether, diethylene glycol dimethyl ether, diethylene glycol monoethyl ether, diethylene glycol monoethyl ether acetate, diisopropyl ether, N,N-diisopropylethylamine, 1,2-dimethoxyethane, dimethyl carbonate, dimethyl sulfoxide, N,N-dimethylacetamide, 1,4-dioxane, 1,3-dioxolane, dodecane, ethanol, 2-ethoxyethanol, ethyl 3-ethoxyproprionate, ethyl acetate, ethylbenzene, ethylene carbonate, ethylene glycol, ethylene glycol butyl ether, ethylene glycol diethyl ether, 2-ethylhexyl acetate, formamide, glycerol, heptane, 2-heptanone, hexadecane, hexane, hexanol, isopentyl acetate, isopropyl acetate, isopropyl alcohol, methanol, 2-methoxyethanol, 2-methoxyethyl acetate, 1-methoxy-2-propanol, methyl acetate, methyl formate, 2-methylbutane, isoamyl alcohol, methylcyclohexane, 5-methyl-2-hexanone, 4-methyl-2-pentanone, isobutyl alcohol, 1-methyl-2-pyrrolidinone, 2-methyltetrahydrofuran, nitrobenzene, nitromethane, nonane, octane, 1-octanol, pentane, 1-pentanol, 2-pentanone, 3-pentanone, petroleum ether, piperidine, 1-propanol, 2-propanol, 2-propoxyethanol, propyl acetate, propylene carbonate, pyridine, 1,1,2,2-tetrachloroethane, tetrachloroethylene, tetrahydrofuran, toluene, 1,2,4-trichlorobenzene, 2,2,4-trimethylpentane, water, m-xylene, o-xylene, p-xylene, and mixtures thereof, just to name a few.

As explained above, the properties of the amphiphilic copolymer can be modulated by altering the identity and proportions of the hydrophilic and hydrophobic subunits. In some embodiments, the hydrophilic subunits derive from at least one carboxyl group-containing vinyl monomer. The hydrophilic subunits may derive from at least one carboxyl group-containing monomer selected from a (meth)acrylic acid or salt or derivative thereof, an unsaturated polybasic acid or salt or derivative thereof, or a combination of these monomers.

In some embodiments, the process is carried out using hydrophilic subunits that derive from at least one carboxyl group-containing monomer selected from acrylic acid, an alkylacrylic acid, an allyl malonic acid, an allyl succinic acid, a butenoic acid, a cinnamic acid, a citriconic acid, a crotonic acid, a glutaconic acid, an itaconic acid, a maleic acid, a fumaric acid, a mesaconic acid, a succinic acid and salts or derivatives thereof. The hydrophilic subunits may derive from maleic acid, a salt or derivative of maleic acid, or a combination thereof.

In some embodiments, the hydrophobic group comprises an alkane group, an alkene group, an ether group, a sulfide group, an ester group, an imide group, a sulfonate group, a phosphonate group, or combinations thereof. For example, the hydrophobic subunits may derive from an aliphatic or alicyclic olefin-containing compound, a (meth)acrylate compound, a vinyl aromatic compound, a vinyl ester compound, a (meth)acrylonitrile compound, a vinyl halide compound, a vinyl ether compound, a (meth)acrylamide compound, or a combination thereof. In some embodiments, the hydrophobic subunits derive from at least one ethylenically-unsaturated compound selected from the group consisting of ethylene, propylene, 1-butene, 2-butene, isobutylene, diisobutylene, 1-pentene, 1-hexene, 1-heptene, 1-octene, 1-nonene, 1-decene, 2-pentene, 3-pentene, propylene tetramer; isobutylene trimer, 1,2-butadiene, 1,3-butadiene, 1,2-pentadiene, 1,3-pentadiene, 1,4-pentadiene, isoprene, 5-hexadiene, 2-methyl-5-propyl-1-hexene, 4-octene and 3,3-dimethyl-1-pentene.

In processes of the present disclosure the amphiphilic copolymer may further comprise at least one additional subunit derived from an ethylenically-unsaturated compound comprising a polar group. For example, the amphiphilic copolymer may further comprise at least one additional subunit derived from an ethylenically-unsaturated compound comprising a halide group, a hydroxyl group, a nitrile group, a nitro group, a sulfonic acid group or a phosphonic acid group. In some embodiments, the amphiphilic copolymer further comprises at least one additional subunit derived from a sulfonic acid group-containing vinyl monomer, an acidic phosphate-containing vinyl monomer, a methylol-group-containing vinyl monomer, or a mixture thereof.

The amphiphilic copolymer may be a crosslinked copolymer or may be a non-crosslinked copolymer. Moreover, the amphiphilic copolymer may be branched or non-branched. The amphiphilic copolymer may be an alternating copolymer comprising alternating hydrophilic and hydrophobic subunits. In some embodiments, the amphiphilic copolymer is a grafted copolymer, and in other embodiments the amphiphilic copolymer is not a grafted copolymer.

In some embodiments, the amphiphilic copolymer comprises a polymer unit represented by the formula (I), (II) or (III):

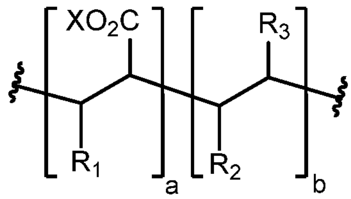

(I)

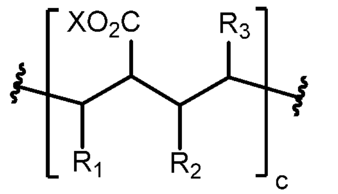

(II)

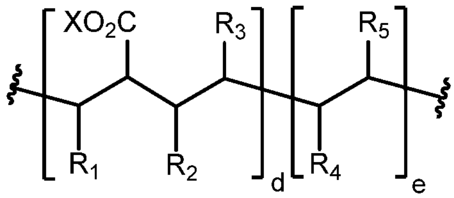

(III)

,

wherein: $R_1$ independently represents a hydrogen atom, an aliphatic group, an alicyclic group, an aromatic group, a heterocyclic group, or a carboxylic acid group or derivative or salt thereof, with the proviso that the $R_1$ group may form a ring with a carbon atom that is $\alpha$, $\beta$ or $\gamma$ relative to the $-CO_2X$ group or may represent a point of crosslinking; $R_2$ independently represents a hydrogen atom, an aliphatic group, an alicyclic group, an aromatic group, a heterocyclic group, an alkene-containing group, an ether-containing group, an ester-containing group, a sulfide-containing group, an imide-containing group, a sulfonate or sulfonic-containing group, a phosphonate or phosphonic-containing group, a nitrile-containing group, a nitro-containing group, a hydroxyl-containing group, or a halide-containing group, with the proviso that the $R_2$ group may form a ring with a carbon atom to which the $R_2$ group is attached or to an adjacent carbon atom or may represent a point of crosslinking; $R_3$ independently represents a hydrogen atom, an aliphatic group, an alicyclic group, an aromatic group, a heterocyclic group, an alkene-containing group, an ether-containing group, an ester-containing group, a sulfide-containing group, an imide-containing group, a sulfonate or sulfonic-containing group, a phosphonate or phosphonic-containing group, a nitrile-containing group, a nitro-containing group, a hydroxyl-containing group, or a halide-containing group, with the proviso that the $R_2$ group may form a ring with a carbon atom to which the $R_2$ group is attached or to an adjacent carbon atom or may represent a point of crosslinking; $R_4$ independently represents a hydrogen atom, an aliphatic group, an alicyclic group, an aromatic group, a heterocyclic group, an alkene-containing group, an ether-containing group, an ester-containing group, a sulfide-containing group, an imide-containing group, a sulfonate or sulfonic-containing group, a phosphonate or phosphonic-containing group, a nitrile-containing group, a nitro-containing group, a hydroxyl-containing group, or a halide-containing group, with the proviso that the $R_2$ group may form a ring with a carbon atom to which the $R_2$ group is attached or to an adjacent carbon atom or may represent a point of crosslinking; $R_5$ independently represents a hydrogen atom, an aliphatic group, an alicyclic group, an aromatic group, a heterocyclic group, an alkene-containing group, an ether-containing group, an ester-containing group, a sulfide-containing group, an imide-containing group, a sulfonate or sulfonic-containing group, a phosphonate or phosphonic-containing group, a nitrile-containing group, a nitro-containing group, a hydroxyl-containing group, or a halide-containing group, with the proviso that the $R_2$ group may form a ring with a carbon atom to which the $R_2$ group is attached or to an adjacent carbon atom or may represent a point of crosslinking; X independently represents a hydrogen atom, an alkyl group, an amino group or a metal atom; a independently represents an integer ranging from 1 to 1000; b independently

represents an integer ranging from 1 to 1000; c independently represents an integer ranging from 1 to 1000; d independently represents an integer ranging from 1 to 1000; and e independently represents an integer ranging from 1 to 1000.

The molar ratio of the hydrophilic subunits to the hydrophobic subunits in the amphiphilic copolymer may range from about 99:1 to about 1:99. In some embodiments, the molar ratio of the hydrophilic subunits to the hydrophobic subunits may range from about 90:10 to about 10:90, or from about 85:15 to about 15:85, or from about 75:25 to about 25:75, or from about 65:35 to about 35:65, or from about 55:45 to about 45:55. The molar ratio of the hydrophilic subunits to the hydrophobic subunits may be adjusted to range from about 5:1 to about 1:5, or from about 4:1 to about 1:4, or from about 3:1 to about 1:3, or from about 2:1 to about 1:2. In other embodiments the molar ratio of the hydrophilic subunits to the hydrophobic subunits in the amphiphilic copolymer may range from about 1:1 to about 1:5, or from about 1:2 to about 1:4, or from about 1:2 to about 1:3.

In some embodiments, the amphiphilic copolymer includes hydrophilic subunits derived from maleic acid or maleic anhydride and hydrophobic subunits derived from diisobutylene. The amphiphilic copolymer may also be chosen from a commercial copolymer containing hydrophilic subunits and hydrophobic subunits. For example, amphiphilic copolymers containing subunits derived from diisobutylene and a maleic acid or derivative thereof may include commercially-available polymers such as RHODOLINE® 111 (available from Solvay Novecare), TAMOL™ 731A (available from Dow Chemical Company) and ACUSOL™ 460 (available from Dow Chemical Company), SOKOLAN® CP-9 (available from BASF) in which the molar ratio of the hydrophilic subunits (maleic acid or derivative thereof) to the hydrophobic subunits (diisobutylene) ranges from about 1:1 to about 1.5.

In addition to the amphiphilic copolymer, in some embodiment the process further comprises contacting the calcium carbonate or precursor thereof with at least one additional surface-modifying agent. The term "surface modification agent" generally refers to a reactive or non-reactive compound containing a hydrophobic and/or oleophobic group including at least one functional group that can chemically react or interact and bond with reactive groups present on the surface of the calcium carbonate. Bonding can be established via chemical bonding, e.g., covalent, including coordinative bonds (complexes) or ionic (salt-like) bonds of the functional group with the surface groups of the calcium carbonate, while interactions can include dipole-dipole interactions, polar interactions, hydrogen bridge bonds and van der Waals interactions.

Examples of suitable surface modification agents are mono- and polycarbonic acids, corresponding acid anhydrides, acid chlorides, esters and acid amides, alcohols, alkyl halides, amino acids, imines, nitriles, isonitriles, epoxy compounds, mono- and polyamine, dicarbonyl compounds, silanes and metal compounds, which have a functional group that can react with the surface groups of the calcium carbonate, as well as at least one hydrophobic and/or oleophobic group. In some embodiments, the surface modification agents containing a hydrophobic and/or oleophobic group are silanes, carbonic acids, carbonic acid derivatives, like acid anhydrides and acid halides, in particular acid chlorides, alcohols, alkyl halides, like alkyl chlorides, alkyl bromides and alkyl iodides, wherein the alkyl residue can be substituted, in particular with fluorine. In some embodiments, one or more surface modification agents can be used to surface modify the calcium carbonate. Both saturated and unsaturated fatty acids may be used as surface modification agents, and in some embodiments, the number of carbon atoms may range from 8 carbons to 40 carbons.

The functional group contained within the surface modification agent can include carbonic acid groups, acid chloride groups, ester groups, nitrile and isonitrile groups, OH groups, alkyl halide groups, SH groups, epoxide groups, anhydride groups, acid amide groups, primary, secondary and tertiary amino groups, Si--OH groups or hydrolysable residues of silanes (Si--X groups described below) or C--H-acid groups, like dicarbonyl compounds. The surface modification agent can also encompass more than one such functional group, e.g., in amino acids or EDTA.

Suitable hydrophobic and/or oleophobic groups may include long-chain aliphatic hydrocarbon groups, e.g., with 1 to 40 or more carbon atoms, in particular alkyl groups, aromatic groups, or groups exhibiting at least one fluorine atom, wherein these are preferably hydrocarbon groups, in particular alkyl residues, with 1 to 20 or more carbon atoms and 1 to 41 fluorine atoms.

Suitable surface modification agents may include hydrolysable silanes with at least one non-hydrolysable hydrophobic and/or oleophobic group-such as hydrolysable silanes that exhibit at least one non-hydrolysable group, which is hydrophobic and/or oleophobic, in particular a group that contains at least one fluorine atom (fluorosilanes) or a long-chain aliphatic hydrocarbon group, e.g., with 1 to 30 carbon atoms, preferably an alkyl group, or an aromatic group.

In some embodiments, the calcium carbonate is surface modified using a surface modification agent selected from an organosilane, an organotitanate, an organozirconate, an organoacid, an organoamine, an organothiol and a phosphinic compound. For example, the calcium carbonate or precursor thereof may also be contacted with at least one fatty acid compound or salt or derivative thereof-thereby producing a surface-modified calcium carbonate having a combination of the amphiphilic copolymer and the fatty acid compound as the surface covering. Fatty acids that may be used as the additional surface-modifying agent may include, for example, stearic acid, oleic acid, linoleic acid, linolenic acid, pinolenic acid, derivatives thereof and mixtures thereof. Other saturated and unsaturated fatty acids and derivatives thereof that are known to be effective surface modification agents for calcium carbonate may also be used as the additional surface modification agent.

As explained above, the fine tuning of the amphiphilic copolymer may involve modulating the proportion of the hydrophilic and hydrophobic subunits. In some embodiments, a molar ratio of the hydrophilic subunits to the hydrophobic subunits in the amphiphilic copolymer ranges from about 20:80 to about 80:20. The proportion of the amphiphilic copolymer relative to the calcium carbonate may also be modulated to tune the properties of the surface-modified calcium carbonate. In some embodiments, a mass ratio of the amphiphilic copolymer to the calcium carbonate or precursor thereof ranges from about 0.01:99.99 to about 5.0:95.0.

Embodiments of the present disclosure also relate to surface-modified calcium carbonates obtained by the processes described above. In some embodiments, particles of the surface-modified calcium carbonate are in the form of a core-shell structure comprising a calcium carbonate core and a shell derived from the amphiphilic copolymer, said shell at least partially coating the calcium carbonate core, in which the shell is ionically bonded to the calcium carbonate core via deprotonated acid groups of the hydrophilic subunits.

Because the characteristics of the amphiphilic copolymer can be tuned to produce a wide variety of copolymers, the properties of the resulting surface-modified calcium carbonates can vary widely. For example, properties such as the surface area, particle size, moisture content, moisture uptake and oil absorption of the surface-modified calcium carbonates can be tuned for various different applications.

In some embodiments, the surface-modified calcium carbonates may have a BET surface area of equal to or greater than 30.0 $m^2/g$. In other embodiments, the BET surface area may range from about 10 $m^2/g$ to about 100 $m^2/g$, from about 100 $m^2/g$ to about 300 $m^2/g$, from about 50 $m^2/g$ to about 150 $m^2/g$, from about 10 $m^2/g$ to about 50 $m^2/g$, from about 3 $m^2/g$ to about 25 $m^2/g$, from about 150 $m^2/g$ to about 250 $m^2/g$, from about 200 $m^2/g$ to about 300 $m^2/g$, or from about 100 $m^2/g$ to about 200 $m^2/g$. "BET surface area," as used herein, refers to the technique for calculating specific surface area of physical absorption molecules according to Brunauer, Emmett, and Teller ("BET") theory. BET surface area can be measured, for example, with an ASAP® 2460 Surface Area and Porosimetry Analyzer using nitrogen as the sorbent gas, available from Micromeritics Instrument Corporation (Norcross, Ga., USA).

In some embodiments, the surface-modified calcium carbonates may have an average particle size ($d_{50}$) of equal to or less than 0.75 $\mu$m. In other embodiments the average particle size ($d_{50}$) may range from about 0.1 $\mu$m to about 2.0 $\mu$m, from 0.2 $\mu$m to about 0.8 $\mu$m, or from about 0.3 $\mu$m to about 0.6 $\mu$m. Particle size may be measured by any appropriate measurement technique now known to the skilled artisan or hereafter discovered. In one exemplary method, particle size and particle size properties, such as particle size distribution ("psd"), are measured using a Leeds and Northrup Microtrac X100 laser particle size analyzer (Leeds and Northrup, North Wales, Pennsylvania, USA), which can determine particle size distribution over a particle size range from 0.12 micrometers ($\mu$m or microns) to 704 $\mu$m. The size of a given particle is expressed in terms of the diameter of a sphere of equivalent diameter that sediments through the suspension, also known as an equivalent spherical diameter or "esd." The median particle size, or $d_{50}$ value, is the value at which 50% by weight of the particles have an esd less than that dso value.

In some embodiments, the surface-modified calcium carbonates may have a moisture uptake of equal to or less than 2.0%. In other embodiments the moisture uptake may range from about 0.1% to about 10%, or from about 2% to about 5%. Moisture uptake is measured by placing about 10 g of a sample into a sealed, humidity-controlled chamber at a particular humidity for a period of 24 hours, and then weight sample to calculate the sample's % moisture uptake for a given humidity and time. In some embodiments, the surface-modified calcium carbonates may have a moisture content of equal to or less than 35%. In other embodiments the moisture content may range from about 2% to about 45%, or from about 5% to about 40%, or from about 10% to about 30%. Moisture content is measured by placing a sample on an aluminum pan and then drying the sample and measuring the weight loss using a moisture analyzer.

Embodiments of the present disclosure also relate to compositions comprising the surface-modified calcium carbonates described above. Such compositions may include, for example, polymers, paints, coatings, sealants and pigments.

## EXAMPLES

The following examples are provided for illustration purposes only and in no way limit the scope of the present disclosure. Embodiments of the present disclosure may employ the use of different or additional components compared to the materials illustrated below, such as other calcium carbonates, other amphiphilic copolymer, and other processing conditions. Those examples which are not encompassed by the claims are provided for reference purposes only.

### Study Overview

In the examples illustrated below, the particle and surface characteristics of surface-modified calcium carbonates are altered and controlled by modulating the proportion and the order of addition of an amphiphilic copolymer used as a surface-modifying agent during formation of precipitated calcium carbonates.

**Materials**

A mineral calcium carbonate (limestone) supplied by Imerys Carbonates was used in the production of precipitated calcium carbonates (PCC). Commercial samples of RHODOLINE® 111 (diisobutylene-maleic anhydride copolymer) were supplied by Solvay.

**Effect of Amphiphilic Copolymer on the Production of Precipitated Calcium Carbonates**

The effect of an amphiphilic copolymer of the present disclosure on the production of precipitated calcium carbonates (PCCs) was explored by adding different proportions of RHODOLINE® 111 to different stages of the production process.

To obtain a reference PCC, a mineral calcium carbonate (limestone) was calcined to obtain gaseous calcium oxide (calcined lime) that was slaked with water to obtain a milk of lime. The milk of lime was then carbonated with carbon dioxide to obtain a suspension of PCC. The suspension of PCC was filtered and dried to obtain PCC particles designated below as the Reference Sample. PCC particles of the Reference Sample were measured to determine the particle and surface characteristics, as summarized in Tables 1 and 2 below.

**Table 1** Particle Size Characteristics of Non-Surface-Modified PCC Particles Used as the Reference Sample

| Reference Sample | | |
|---|---|---|
| Sedigraph PSD | **$D_{50}$** | 2.56 µm |
| | **> 5 µm** | 3.7% |
| | **< 2 µm** | 16.1% |
| | **< 1 µm** | 1.7% |
| | **< 0.5 µm** | 0.9% |
| | **Steepness** ($D_{70}$ / $D_{30}$) | 0.76 |

**Table 2** Surface Characteristics of Non-Surface-Modified PCC Particles Used as the Reference Sample

| Reference Sample | | | |
|---|---|---|---|
| **$N_2$ BET SA** | 5 point | $m^2/g$ | 17.36 |
| | | C | 328 |
| **MPU** | 100% RH/24 hrs | | 3.60 wt% |

To study the effects of the amphiphilic copolymer in the surface modification of PCC, the procedure described above for the preparation of PCC was modified such that RHODOLINE® 111 was added at different stages of the procedure. In one set of experiments, different proportions of the amphiphilic copolymer were added to the milk of lime in order to study the effects of pre-carbonation addition of the amphiphilic copolymer during PCC production. The results of the pre-carbonation addition of RHODOLINE® 111 are summarized in Figure 3 and Tables 3 and 5 below. In another set of experiments, different proportions of the amphiphilic copolymer were added to the suspension of PCC. The results of the post-carbonation addition of RHODOLINE® 111 are summarized in Tables 4 and 6 below.

As shown in Table 3, addition of an amphiphilic copolymer to the milk of lime prior to carbonation resulted in the formation of surface-modified calcium carbonates having significantly reduced particle sizes relative to the PCC particles of the Reference Sample. The particle size characteristics were found to be dose dependent, such that the particle size ($D_{50}$) and steepness ($D_{70}$ / $D_{30}$) of the surface-modified calcium carbonates were minimized by using lower

doses of 0.25 mass% and 0.5 mass% of RHODOLINE® 111.

**Table 3** Effect of *Pre*-Carbonation Addition of Amphiphilic Copolymer on Particle Characteristics of Surface-Modified PCC

| | | Reference Sample | Ex. 1 | Ex. 2 | Ex. 3 |
|---|---|---|---|---|---|
| **Amount of Copolymer**[a)] | | n/a | 0.25 mass% | 0.50 mass% | 1.0 mass% |
| Sedigraph PSD | **$D_{50}$** | 2.56 µm | 0.87 µm | 0.91 µm | 1.06 µm |
| | **> 5 µm** | 3.7% | 0.2% | 0.8% | 0.6% |
| | **< 2 µm** | 16.1% | 92.7% | 89.6% | 91.5% |
| | **< 1 µm** | 1.7% | 58% | 28.2% | 46.6% |
| | **< 0.5 µm** | 0.9% | 28.2% | 29.8% | 20% |
| | **Steepness** ($D_{70}$ / $D_{30}$) | 0.76 | 0.43 | 0.39 | 0.51 |

a) RHODOLINE® 111

**Table 4** Effect of *Post*-Carbonation Addition of Amphiphilic Copolymer on Particle Characteristics of Surface-Modified PCC

| | | Reference Sample | Ex. 4 | Ex. 5 | Ex. 6 | Ex. 7 |
|---|---|---|---|---|---|---|
| **Amount of Copolymer**[a)] | | n/a | 0.25 mass% | 0.50 mass% | 1.0 mass% | 2.0 mass% |
| Sedigraph PSD | **$D_{50}$** | 2.56 µm | 0.9 µm | 0.9 µm | 0.93 µm | 0.95 µm |
| | **> 5 µm** | 3.7% | 0.1% | 0.2% | 0.3% | 1.3% |
| | **< 2 µm** | 16.1% | 95.1% | 95.4% | 95.8% | 94.7% |
| | **< 1 µm** | 1.7% | 57.4% | 57.6% | 55.9% | 54.3% |
| | **< 0.5 µm** | 0.9% | 26.6% | 27.4% | 24.2% | 23.9% |
| | **Steepness** ($D_{70}$ / $D_{30}$) | 0.76 | 0.48 | 0.48 | 0.52 | 0.52 |

a) RHODOLINE® 111

As shown in Table 4, addition of the amphiphilic copolymer to the suspension of PCC after carbonation also resulted in the formation of surface-modified calcium carbonates also having reduced particle sizes relative to the PCC particles of the Reference Sample. The particle size characteristics were found to be dose dependent, such that the particle size ($D_{50}$) and steepness ($D_{70}$ / $D_{30}$) of the surface-modified calcium carbonates were minimized by using lower doses of 0.25 mass% and 0.5 mass% of RHODOLINE® 111.

As shown in Table 5, addition of an amphiphilic copolymer to the milk of lime prior to carbonation resulted in the formation of surface-modified calcium carbonates having significantly increased surface area and moisture uptake relative to the PCC particles of the Reference Sample. The BET surface area and moisture uptake were found to be dose dependent, such that increasing the proportion of the amphiphilic copolymer caused an increase in both the BET

surface area and the moisture uptake of surface-modified calcium carbonate particles. Figure 1 is a bar chart showing the nitrogen BET surface areas of surface-modified calcium carbonate particles versus the percent amount of amphiphilic copolymer added to a pre-carbonation milk of lime during production of PCC particles.

**Table 5** Effect of *Pre*-Carbonation Addition of Amphiphilic Copolymer on Particle Characteristics of Surface-Modified PCC

| | | | Reference Sample | Ex. 8 | Ex. 9 | Ex. 10 |
|---|---|---|---|---|---|---|
| **Amount of Copolymer**[a)] | | | n/a | 0.25 mass% | 0.50 mass% | 1.0 mass% |
| **$N_2$ BET SA** | 5 point | $m^2/g$ | 17.36 | 23.10 | 29.08 | 34.66 |
| | | C | 328 | 168.9 | 112.3 | 78.7 |
| **MPU** | 100% RH/24 hrs | | 3.60 wt% | 4.11 wt% | 4.92 wt% | 5.21 wt% |
| a) RHODOLINE® 111 | | | | | | |

As shown in Table 6 and Figure 2, addition of an amphiphilic copolymer to the suspension of PCC after carbonylation also resulted in the formation of surface-modified calcium carbonates having significantly increased surface area relative to the PCC particles of the Reference Sample. The BET surface area was found to be dose dependent, such that increasing the proportion of the amphiphilic copolymer caused an increase in the BET surface areas of surface-modified calcium carbonate particles.The moisture uptake was also found to be dose dependent. However, surprisingly, an opposite dose dependence was observed relative to the pre-carbonylation data in Table 5-such that increasing the proportion of the amphiphilic copolymer causes the moisture uptake of the surface-modified calcium carbonate particles to decrease. In Example 11, the post-carbonylation addition of 0.25 mass% of RHODOLINE® 111 produced surface-modified calcium carbonate particles have a moisture uptake (MPU) of 4.83 wt.%. Increasing the proportion of the added RHODOLINE® 111 in Examples 12-14 produced surface-modified calcium carbonate particles have progressively lower moisture uptake values of 4.37 wt.%, 4.09 wt.% and 3.34 wt.% respectively.

**Table 6** Effect of Post-Carbonation Addition of Amphiphilic Copolymer on Particle Characteristics of Surface-Modified PCC

| | | | Reference Sample | Ex. 11 | Ex. 12 | Ex. 13 | Ex. 14 |
|---|---|---|---|---|---|---|---|
| **Amount of Copolymer**[a)] | | | n/a | 0.25 mass% | 0.50 mass% | 1.0 mass% | 2.0 mass % |
| **$N_2$ BET SA** | 5 point | $m^2/g$ | 17.36 | 31.49 | 33.55 | 36.87 | 38.13 |
| | | C | 328 | 140.4 | 91.3 | 60.4 | 44.9 |
| **MPU** | 100% RH/24 hrs | | 3.60 wt% | 4.83 wt% | 4.37 wt% | 4.09 wt% | 3.34 wt% |
| a) RHODOLINE® 111 | | | | | | | |

## Claims

**1.** A process for producing a surface-modified calcium carbonate, the process comprising contacting a milk of lime comprising calcium hydroxide with at least one amphiphilic copolymer comprising hydrophilic subunits and hydrophobic subunits, wherein:

the hydrophilic subunits derive from at least one ethylenically-unsaturated compound comprising a carboxylic acid group or salt or derivative thereof;
the hydrophobic subunits derive from at least one ethylenically-unsaturated compound comprising a hydrophobic group; and
the amphiphilic copolymer has a hydrophilic-lipophilic balance value ranging from about 1 to about 40.

**2.** The process of Claim 1, wherein:

the hydrophilic subunits derive from maleic acid or maleic anhydride; and
the hydrophobic subunits derive from diisobutylene.

3. The process of Claim 1 or Claim 2, wherein the hydrophilic subunits derive from at least one carboxyl group-containing vinyl monomer, and/or wherein the hydrophilic subunits derive from at least one carboxyl group-containing monomer selected from the group consisting of a (meth)acrylic acid or salt or derivative thereof, an unsaturated polybasic acid or salt or derivative thereof, and mixtures thereof, or wherein the hydrophilic subunits derive from at least one carboxyl group-containing monomer selected from the group consisting of acrylic acid, an alkylacrylic acid, an allyl malonic acid, an allyl succinic acid, a butenoic acid, a cinnamic acid, a citriconic acid, a crotonic acid, a glutaconic acid, an itaconic acid, a maleic acid, a fumaric acid, a mesaconic acid, a succinic acid and salts or derivatives thereof, or wherein the hydrophilic subunits derive from maleic acid, a salt or derivative of maleic acid, or a combination thereof.

4. The process of any one of the preceding Claims, wherein the hydrophobic group comprises an alkane group, an alkene group, an ether group, a sulfide group, an ester group, an imide group, a sulfonate group, a phosphonate group, or combinations thereof, and/or wherein the hydrophobic subunits derive from an aliphatic or alicyclic olefin-containing compound, a (meth)acrylate compound, a vinyl aromatic compound, a vinyl ester compound, a (meth)acrylonitrile compound, a vinyl halide compound, a vinyl ether compound, a (meth)acrylamide compound, or a combination thereof, optionally wherein the hydrophobic subunits derive from at least one ethylenically-unsaturated compound selected from the group consisting of ethylene, propylene, 1-butene, 2-butene, isobutylene, diisobutylene, 1-pentene, 1-hexene, 1-heptene, 1-octene, 1-nonene, 1-decene, 2-pentene, 3-pentene, propylene tetramer; isobutylene trimer, 1,2-butadiene, 1,3-butadiene, 1,2-pentadiene, 1,3-pentadiene, 1,4-pentadiene, isoprene, 5-hexadiene, 2-methyl-5-propyl-1-hexene, 4-octene and 3,3-dimethyl-1-pentene.

5. The process of any one of the preceding Claims, wherein the amphiphilic copolymer further comprises at least one additional subunit derived from an ethylenically-unsaturated compound comprising a polar group, optionally wherein the amphiphilic copolymer further comprises at least one additional subunit derived from an ethylenically-unsaturated compound comprising a halide group, a hydroxyl group, a nitrile group, a nitro group, a sulfonic acid group or a phosphonic acid group, optionally wherein the amphiphilic copolymer further comprises at least one additional subunit derived from a sulfonic acid group-containing vinyl monomer, an acidic phosphate-containing vinyl monomer, a methylol-group-containing vinyl monomer, or a mixture thereof.

6. The process any one of the preceding Claims, wherein the amphiphilic copolymer is a crosslinked copolymer.

7. The process of any one of the preceding Claims, wherein the amphiphilic copolymer is an alternating copolymer comprising alternating hydrophilic and hydrophobic subunits.

8. The process of any one of the preceding Claims, wherein the amphiphilic copolymer comprises a polymer unit represented by the formula (I), (II) or (III):

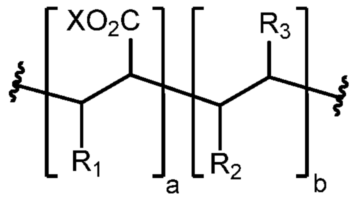

(I)

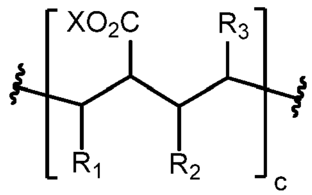

(II)

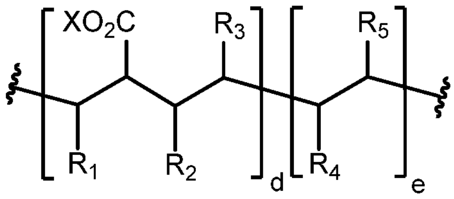

(III)

,

wherein:

$R_1$ independently represents a hydrogen atom, an aliphatic group, an alicyclic group, an aromatic group, a heterocyclic group, or a carboxylic acid group or derivative or salt thereof, with the proviso that the $R_1$ group may form a ring with a carbon atom that is $\alpha$, $\beta$ or $\gamma$ relative to the $-CO_2X$ group or may represent a point of crosslinking;
$R_2$ independently represents a hydrogen atom, an aliphatic group, an alicyclic group, an aromatic group, a heterocyclic group, an alkene-containing group, an ether-containing group, an ester-containing group, a sulfide-containing group, an imide-containing group, a sulfonate or sulfonic-containing group, a phosphonate or phosphonic-containing group, a nitrile-containing group, a nitro-containing group, a hydroxyl-containing group, or a halide-containing group, with the proviso that the $R_2$ group may form a ring with a carbon atom to which the $R_2$ group is attached or to an adjacent carbon atom or may represent a point of crosslinking;
$R_3$ independently represents a hydrogen atom, an aliphatic group, an alicyclic group, an aromatic group, a heterocyclic group, an alkene-containing group, an ether-containing group, an ester-containing group, a sulfide-containing group, an imide-containing group, a sulfonate or sulfonic-containing group, a phosphonate or phosphonic-containing group, a nitrile-containing group, a nitro-containing group, a hydroxyl-containing group, or a halide-containing group, with the proviso that the $R_2$ group may form a ring with a carbon atom to which the $R_2$ group is attached or to an adjacent carbon atom or may represent a point of crosslinking;
$R_4$ independently represents a hydrogen atom, an aliphatic group, an alicyclic group, an aromatic group, a heterocyclic group, an alkene-containing group, an ether-containing group, an ester-containing group, a sulfide-containing group, an imide-containing group, a sulfonate or sulfonic-containing group, a phosphonate or phosphonic-containing group, a nitrile-containing group, a nitro-containing group, a hydroxyl-containing group, or a halide-containing group, with the proviso that the $R_2$ group may form a ring with a carbon atom to which the $R_2$ group is attached or to an adjacent carbon atom or may represent a point of crosslinking;
$R_5$ independently represents a hydrogen atom, an aliphatic group, an alicyclic group, an aromatic group, a heterocyclic group, an alkene-containing group, an ether-containing group, an ester-containing group, a sulfide-containing group, an imide-containing group, a sulfonate or sulfonic-containing group, a phosphonate or phosphonic-containing group, a nitrile-containing group, a nitro-containing group, a hydroxyl-containing group, or a halide-containing group, with the proviso that the $R_2$ group may form a ring with a carbon atom to which the $R_2$ group is attached or to an adjacent carbon atom or may represent a point of crosslinking;
X independently represents a hydrogen atom, an alkyl group, an amino group or a metal atom;
a independently represents an integer ranging from 1 to 1000;
b independently represents an integer ranging from 1 to 1000;
c independently represents an integer ranging from 1 to 1000;
d independently represents an integer ranging from 1 to 1000; and
e independently represents an integer ranging from 1 to 1000.

**9.** The process of any one of the preceding Claims, comprising:

contacting the amphiphilic copolymer with the milk of lime comprising calcium hydroxide and carrying out carbonation, to obtain a dispersion of the surface-modified calcium carbonate; and
removing the liquid medium from the dispersion to obtain a powder of the surface-modified calcium carbonate.

**10.** The process of any one of the preceding Claims, wherein the milk of lime comprising calcium hydroxide is contacted with an aqueous dispersion of the amphiphilic copolymer or a salt thereof, and/or further comprising contacting the milk of lime comprising calcium hydroxide with at least one additional surface-modifying agent, and/or further comprising contacting the milk of lime comprising calcium hydroxide with at least one fatty acid compound or salt or derivative thereof.

**11.** The process of any one of the preceding Claims, wherein a molar ratio of the hydrophilic subunits to the hydrophobic

subunits in the amphiphilic copolymer ranges from about 20:80 to about 80:20 and/or wherein a mass ratio of the amphiphilic copolymer to the calcium carbonate or precursor thereof ranges from about 0.01:99.99 to about 5.0:95.0.

**12.** A surface-modified calcium carbonate obtained by the process of Claim 1, optionally wherein:

particles of the surface-modified calcium carbonate are in the form of a core-shell structure comprising a calcium carbonate core and a shell derived from the amphiphilic copolymer, said shell at least partially coating the calcium carbonate core; and
the shell is ionically bonded to the calcium carbonate core via deprotonated acid groups of the hydrophilic subunits.

**13.** The surface-modified calcium carbonate of Claim 12, having a feature selected from: (i) a BET surface area of equal to or greater than 30.0 $m^2/g$, (ii) an average particle size ($d_{50}$) of equal to or less than 0.75 $\mu m$, (iii) a moisture uptake of equal to or less than 2.0% and (iv) a moisture content of equal to or less than 35%.

**14.** A composition, comprising the surface-modified calcium carbonate of Claim 12 or Claim 13, wherein the composition is selected from the group consisting of a polymer, a paint, a coating, a sealant and a color modifying agent.

## Patentansprüche

**1.** Verfahren zur Herstellung eines oberflächenmodifizierten Calciumcarbonats, das Verfahren umfassend ein Inkontaktbringen einer Kalkmilch umfassend Calciumhydroxid oder eines Vorläufers davon mit mindestens einem amphiphilen Copolymer umfassend hydrophile Untereinheiten und hydrophobe Untereinheiten, wobei
die hydrophilen Untereinheiten von mindestens einer ethylenisch ungesättigten Verbindung abgeleitet sind, die eine Carbonsäuregruppe oder ein Salz oder Derivat davon umfasst;
die hydrophoben Untereinheiten von mindestens einer ethylenisch ungesättigten Verbindung abgeleitet sind, die eine hydrophobe Gruppe umfasst; und
das amphiphile Copolymer einen hydrophil-lipophilen Gleichgewichtswert in einem Bereich von etwa 1 bis etwa 40 aufweist.

**2.** Verfahren gemäß Anspruch 1, wobei:

die hydrophilen Untereinheiten von Maleinsäure oder Maleinsäureanhydrid abgeleitet sind; und
die hydrophoben Untereinheiten von Diisobutylen abgeleitet sind.

**3.** Verfahren gemäß Anspruch 1 oder Anspruch 2, wobei die hydrophilen Untereinheiten von mindestens einem carboxylgruppenhaltigen Vinylmonomer abgeleitet sind und/oder wobei die hydrophilen Untereinheiten von mindestens einem carboxylgruppenhaltigen Monomer abgeleitet sind, das aus der Gruppe ausgewählt ist, die aus einer (Meth)acrylsäure oder einem Salz oder Derivat davon, einer ungesättigten mehrbasischen Säure oder einem Salz oder Derivat davon und Gemischen davon besteht, oder wobei die hydrophilen Untereinheiten von mindestens einem carboxylgruppenhaltigen Monomer abgeleitet sind, das aus der Gruppe ausgewählt ist, die aus Acrylsäure, einer Alkylacrylsäure, einer Allylmalonsäure, einer Allylbernsteinsäure, einer Butenoinsäure, einer Zimtsäure, einer Zitronensäure, einer Crotonsäure, einer Glutaconsäure, einer Itaconsäure, einer Maleinsäure, einer Fumarsäure, einer Mesaconsäure, einer Bernsteinsäure und Salzen oder Derivaten davon besteht, oder wobei die hydrophilen Untereinheiten von Maleinsäure, einem Salz oder Derivat der Maleinsäure oder einer Kombination davon abgeleitet sind.

**4.** Verfahren gemäß einem der vorherigen Ansprüche, wobei die hydrophobe Gruppe eine Alkangruppe, eine Alkengruppe, eine Ethergruppe, eine Sulfidgruppe, eine Estergruppe, eine Imidgruppe, eine Sulfonatgruppe, eine Phosphonatgruppe oder Kombinationen davon umfasst, und/oder wobei die hydrophoben Untereinheiten von einer aliphatischen oder alicyclischen olefinhaltigen Verbindung, einer (Meth)acrylatverbindung, einer vinylaromatischen Verbindung, einer Vinylesterverbindung, einer (Meth)acrylnitril-Verbindung, einer Vinylhalogenid-Verbindung, einer Vinylether-Verbindung, einer (Meth)acrylamid-Verbindung oder einer Kombination davon abgeleitet sind, wobei die hydrophoben Untereinheiten optional von mindestens einer ethylenisch ungesättigten Verbindung abgeleitet sind, die aus der Gruppe ausgewählt ist, die aus Ethylen, Propylen, 1-Buten, 2-Buten, Isobutylen, Diisobutylen, 1-Penten, 1-Hexen, 1-Hepten, 1-Octen, 1-Nonen, 1-Decen, 2-Penten, 3-Penten, Propylentetramer; Isobutylen-Trimer, 1,2-Butadien, 1,3-Butadien, 1,2-Pentadien, 1,3-Pentadien, 1,4-Pentadien, Isopren, 5-Hexadien, 2-Methyl-5-propyl-1-hexen, 4-Octen und 3,3-Dimethyl-1-penten besteht.

5. Verfahren gemäß einem der vorherigen Ansprüche, wobei das amphiphile Copolymer ferner mindestens eine zusätzliche Untereinheit umfasst, die von einer ethylenisch ungesättigten Verbindung abgeleitet ist, die eine polare Gruppe umfasst, wobei das amphiphile Copolymer optional mindestens eine zusätzliche Untereinheit umfasst, die von einer ethylenisch ungesättigten Verbindung abgeleitet ist, die eine Halogenidgruppe, eine Hydroxylgruppe, eine Nitrilgruppe, eine Nitrogruppe, eine Sulfonsäuregruppe oder eine Phosphonsäuregruppe umfasst, wobei das amphiphile Copolymer optional mindestens eine zusätzliche Untereinheit umfasst, die von einem sulfonsäuregruppenhaltigen Vinylmonomer, einem sauren phosphathaltigen Vinylmonomer, einem methylolgruppenhaltigen Vinylmonomer oder einem Gemisch davon abgeleitet ist.

6. Verfahren gemäß einem der vorherigen Ansprüche, wobei das amphiphile Copolymer ein vernetztes Copolymer ist.

7. Verfahren gemäß einem der vorherigen Ansprüche, wobei das amphiphile Copolymer ein alternierendes Copolymer ist, das alternierende hydrophile und hydrophobe Untereinheiten umfasst.

8. Verfahren gemäß einem der vorherigen Ansprüche, wobei das amphiphile Copolymer eine Polymereinheit umfasst, die durch die Formel (I), (II) oder (III) dargestellt ist:

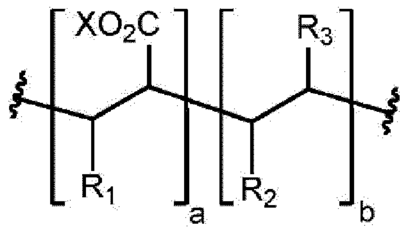

(I)

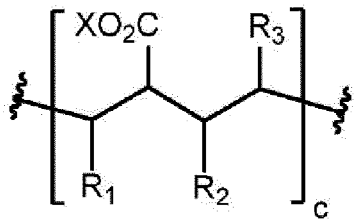

(II)

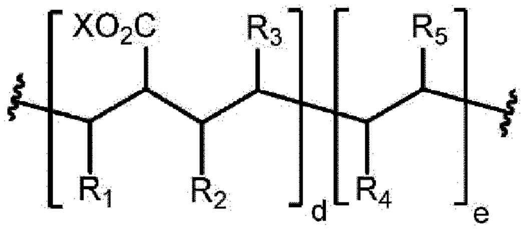

(III)

,

wobei:

$R_1$ unabhängig ein Wasserstoffatom, eine aliphatische Gruppe, eine alicyclische Gruppe, eine aromatische Gruppe, eine heterocyclische Gruppe oder eine Carbonsäuregruppe oder ein Derivat oder Salz davon darstellt, mit der Maßgabe, dass die Gruppe $R_1$ einen Ring mit einem Kohlenstoffatom bilden kann, das in Bezug auf die $-CO_2X$-Gruppe $\alpha$, $\beta$ oder $\gamma$ ist, oder einen Vernetzungspunkt darstellen kann;
$R_2$ unabhängig ein Wasserstoffatom, eine aliphatische Gruppe, eine alicyclische Gruppe, eine aromatische Gruppe, eine heterocyclische Gruppe, eine alkenhaltige Gruppe, eine etherhaltige Gruppe, eine esterhaltige Gruppe, eine sulfidhaltige Gruppe, eine imidhaltige Gruppe, eine sulfonat- oder sulfonsäurehaltige Gruppe, eine phosphonat- oder phosphonsäurehaltige Gruppe, eine nitrilhaltige Gruppe, eine nitrohaltige Gruppe, eine hydroxylhaltige Gruppe oder eine halogenidhaltige Gruppe darstellt, mit der Maßgabe, dass die Gruppe $R_2$ mit einem Kohlenstoffatom, an das die Gruppe $R_2$ gebunden ist, oder mit einem benachbarten Kohlenstoffatom

einen Ring bilden oder einen Vernetzungspunkt darstellen kann;
$R_3$ unabhängig ein Wasserstoffatom, eine aliphatische Gruppe, eine alicyclische Gruppe, eine aromatische Gruppe, eine heterocyclische Gruppe, eine alkenhaltige Gruppe, eine etherhaltige Gruppe, eine esterhaltige Gruppe, eine sulfidhaltige Gruppe, eine imidhaltige Gruppe, eine sulfonat- oder sulfonsäurehaltige Gruppe, eine phosphonat- oder phosphonsäurehaltige Gruppe, eine nitrilhaltige Gruppe, eine nitrohaltige Gruppe, eine hydroxylhaltige Gruppe oder eine halogenidhaltige Gruppe darstellt, mit der Maßgabe, dass die Gruppe $R_2$ mit einem Kohlenstoffatom, an das die Gruppe $R_2$ gebunden ist, oder mit einem benachbarten Kohlenstoffatom einen Ring bilden oder einen Vernetzungspunkt darstellen kann;
$R_4$ unabhängig ein Wasserstoffatom, eine aliphatische Gruppe, eine alicyclische Gruppe, eine aromatische Gruppe, eine heterocyclische Gruppe, eine alkenhaltige Gruppe, eine etherhaltige Gruppe, eine esterhaltige Gruppe, eine sulfidhaltige Gruppe, eine imidhaltige Gruppe, eine sulfonat- oder sulfonsäurehaltige Gruppe, eine phosphonat- oder phosphonsäurehaltige Gruppe, eine nitrilhaltige Gruppe, eine nitrohaltige Gruppe, eine hydroxylhaltige Gruppe oder eine halogenidhaltige Gruppe darstellt, mit der Maßgabe, dass die Gruppe $R_2$ mit einem Kohlenstoffatom, an das die Gruppe $R_2$ gebunden ist, oder mit einem benachbarten Kohlenstoffatom einen Ring bilden oder einen Vernetzungspunkt darstellen kann;
$R_5$ unabhängig ein Wasserstoffatom, eine aliphatische Gruppe, eine alicyclische Gruppe, eine aromatische Gruppe, eine heterocyclische Gruppe, eine alkenhaltige Gruppe, eine etherhaltige Gruppe, eine esterhaltige Gruppe, eine sulfidhaltige Gruppe, eine imidhaltige Gruppe, eine sulfonat- oder sulfonsäurehaltige Gruppe, eine phosphonat- oder phosphonsäurehaltige Gruppe, eine nitrilhaltige Gruppe, eine nitrohaltige Gruppe, eine hydroxylhaltige Gruppe oder eine halogenidhaltige Gruppe darstellt, mit der Maßgabe, dass die Gruppe $R_2$ mit einem Kohlenstoffatom, an das die Gruppe $R_2$ gebunden ist, oder mit einem benachbarten Kohlenstoffatom einen Ring bilden oder einen Vernetzungspunkt darstellen kann;
X unabhängig ein Wasserstoffatom, eine Alkylgruppe, eine Aminogruppe oder ein Metallatom darstellt;
a unabhängig eine Ganzzahl in einem Bereich von 1 bis 1000 darstellt;
b unabhängig eine Ganzzahl in einem Bereich von 1 bis 1000 darstellt;
c unabhängig eine Ganzzahl von 1 bis 1000 darstellt;
d unabhängig eine Ganzzahl in einem Bereich von 1 bis 1000 darstellt; und
e unabhängig eine Ganzzahl in einem Bereich von 1 bis 1000 darstellt.

**9.** Verfahren gemäß einem der vorherigen Ansprüche, umfassend:

Inkontaktbringen des amphiphilen Copolymers mit der Kalkmilch umfassend Calciumhydroxid und Durchführen von Karbonisierung, um eine Dispersion des oberflächenmodifizierten Calciumcarbonats zu erlangen; und
Entfernen des flüssigen Mediums aus der Dispersion, um ein Pulver des oberflächenmodifizierten Calciumcarbonats zu erlangen.

**10.** Verfahren gemäß einem der vorherigen Ansprüche, wobei die Kalkmilch umfassend Calciumhydroxid mit einer wässrigen Dispersion des amphiphilen Copolymers oder eines Salzes davon in Kontakt gebracht wird, und/oder ferner umfassend ein Inkontaktbringen der Kalkmilch umfassend Calciumhydroxid mit mindestens einem zusätzlichen oberflächenmodifizierenden Mittel, und/oder ferner umfassend ein Inkontaktbringen der Kalkmilch umfassend Calciumhydroxid mit mindestens einer Fettsäureverbindung oder einem Salz oder Derivat davon.

**11.** Verfahren gemäß einem der vorherigen Ansprüche, wobei ein Molverhältnis der hydrophilen Untereinheiten zu den hydrophoben Untereinheiten in dem amphiphilen Copolymer in einem Bereich von etwa 20:80 bis etwa 80:20 ist und/oder wobei ein Massenverhältnis des amphiphilen Copolymers zu dem Calciumcarbonat oder dessen Vorläufer in einem Bereich von etwa 0,01:99,99 bis etwa 5,0:95,0 ist.

**12.** Oberflächenmodifiziertes Calciumcarbonat, das durch das Verfahren gemäß Anspruch 1 erlangt wird, optional wobei:

Partikel des oberflächenmodifizierten Calciumcarbonats in Form einer Kern-Schalen-Struktur sind, die einen Calciumcarbonat-Kern und eine von dem amphiphilen Copolymer abgeleitete Schale umfasst, wobei die Schale den Calciumcarbonat-Kern zumindest teilweise beschichtet; und
die Schale über deprotonierte Säuregruppen der hydrophilen Untereinheiten ionisch an den Calciumcarbonat-Kern gebunden ist.

**13.** Oberflächenmodifiziertes Calciumcarbonat gemäß Anspruch 12, das ein Merkmal aufweist, das aus Folgenden ausgewählt ist: (i) einer BET-Oberfläche gleich wie oder größer als 30,0 $m^2/g$, (ii) einer mittleren Teilchengröße ($d_{50}$) gleich wie oder kleiner als 0,75 $\mu m$, (iii) einer Feuchtigkeitsaufnahme gleich wie oder weniger als 2,0 % und

(iv) einem Feuchtigkeitsgehalt gleich wie oder weniger als 35 %.

14. Zusammensetzung, umfassend das oberflächenmodifizierte Calciumcarbonat gemäß Anspruch 12 oder 13, wobei die Zusammensetzung ausgewählt ist aus der Gruppe bestehend aus einem Polymer, einer Farbe, einer Beschichtung, einem Dichtmittel und einem Farbmodifizierungsmittel.

## Revendications

1. Un procédé pour produire un carbonate de calcium modifié en surface, le procédé comprenant la mise en contact d'un lait de chaux comprenant de l'hydroxyde de calcium avec au moins un copolymère amphiphile comprenant des sous-unités hydrophiles et des sous-unités hydrophobes, dans lequel :

   les sous-unités hydrophiles dérivent d'au moins un composé éthyléniquement insaturé comprenant un groupe d'acide carboxylique ou un sel ou un dérivé de celui-ci ;
   les sous-unités hydrophobes dérivent d'au moins un composé éthyléniquement insaturé comprenant un groupe hydrophobe ; et
   le copolymère amphiphile a une valeur d'équilibre hydrophile-lipophile allant d'environ 1 à environ 40.

2. Le procédé selon la revendication 1, dans lequel :

   les sous-unités hydrophiles dérivent de l'acide maléique ou de l'anhydride maléique ; et
   les sous-unités hydrophobes dérivent du diisobutylène.

3. Le procédé selon la revendication 1 ou la revendication 2, dans lequel les sous-unités hydrophiles dérivent d'au moins un monomère vinylique contenant un groupe carboxyle, et / ou dans lequel les sous-unités hydrophiles dérivent d'au moins un monomère contenant un groupe carboxyle choisi dans le groupe constitué par un acide (méth)acrylique ou un sel ou un dérivé de celui-ci, un acide polybasique insaturé ou un sel ou un dérivé de celui-ci, et des mélanges de ceux-ci, ou dans lequel les sous-unités hydrophiles dérivent d'au moins un monomère contenant un groupe carboxyle choisi dans le groupe constitué par l'acide acrylique, un acide alkylacrylique, un acide malonique d'allyle, un acide succinique d'allyle, un acide buténoïque, un acide cinnamique, un acide citraconique, un acide crotonique, un acide glutaconique, un acide itaconique, un acide maléique, un acide fumarique, un acide mésaconique, un acide succinique et des sels ou des dérivés de ceux-ci, ou dans lequel les sous-unités hydrophiles dérivent de l'acide maléique, d'un sel ou d'un dérivé d'acide maléique, ou d'une combinaison de ceux-ci.

4. Le procédé selon l'une quelconque des revendications précédentes, dans lequel le groupe hydrophobe comprend un groupe alcane, un groupe alcène, un groupe éther, un groupe sulfure, un groupe ester, un groupe imide, un groupe sulfonate, un groupe phosphonate, ou des combinaisons de ceux-ci, et / ou dans lequel les sous-unités hydrophobes dérivent d'un composé contenant une oléfine aliphatique ou alicyclique, d'un composé (méth)acrylate, d'un composé aromatique vinylique, d'un composé ester vinylique, d'un composé (méth)acrylonitrile, d'un composé halogénure vinylique, d'un composé éther vinylique, d'un composé (méth)acrylamide, ou d'une combinaison de ceux-ci, éventuellement dans lequel les sous-unités hydrophobes dérivent d'au moins un composé éthyléniquement insaturé choisi dans le groupe constitué par l'éthylène, le propylène, le 1-butène, le 2-butène, l'isobutylène, le diisobutylène, le 1-pentène, le 1-hexène, le 1-heptène, le 1-octène, le 1-nonène, le 1-décène, le 2-pentène, le 3-pentène, le tétramère de propylène; le trimère d'isobutylène, le 1,2-butadiène, le 1,3-butadiène, le 1,2-pentadiène, le 1,3-pentadiène, le 1,4-pentadiène, l'isoprène, le 5-hexadiène, le 2-méthyl-5-propyl-1-hexène, le 4-octène et le 3,3-diméthyl-1-pentène.

5. Le procédé selon l'une quelconque des revendications précédentes, dans lequel le copolymère amphiphile comprend en outre au moins une sous-unité supplémentaire dérivée d'un composé éthyléniquement insaturé comprenant un groupe polaire, éventuellement dans lequel le copolymère amphiphile comprend en outre au moins une sous-unité supplémentaire dérivée d'un composé éthyléniquement insaturé comprenant un groupe halogénure, un groupe hydroxyle, un groupe nitrile, un groupe nitro, un groupe d'acide sulfonique ou un groupe d'acide phosphonique, éventuellement dans lequel le copolymère amphiphile comprend en outre au moins une sous-unité supplémentaire dérivée d'un monomère vinylique contenant un groupe d'acide sulfonique, d'un monomère vinylique contenant un phosphate acide, d'un monomère vinylique contenant un groupe méthylol, ou d'un mélange de ceux-ci.

6. Le procédé selon l'une quelconque des revendications précédentes, dans lequel le copolymère amphiphile est un

copolymère réticulé.

**7.** Le procédé selon l'une quelconque des revendications précédentes, dans lequel le copolymère amphiphile est un copolymère alterné comprenant des sous-unités hydrophiles et hydrophobes alternées.

**8.** Le procédé selon l'une quelconque des revendications précédentes, dans lequel le copolymère amphiphile comprend une unité polymère représentée par la formule (I), (II) ou (III) :

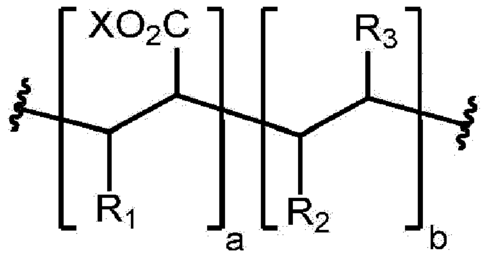

(I)

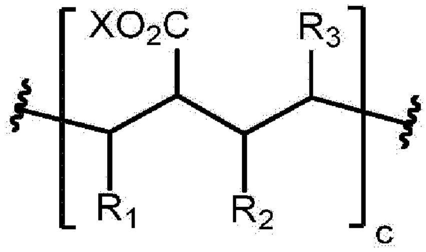

(II)

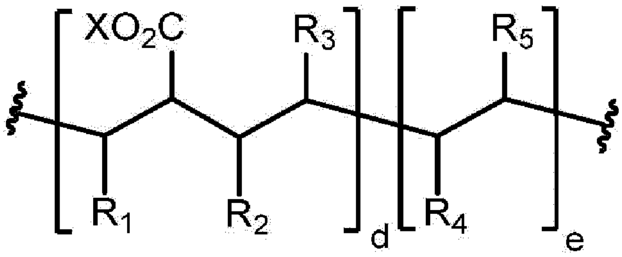

(III)

,

dans lequel :

$R_1$ représente indépendamment un atome d'hydrogène, un groupe aliphatique, un groupe alicyclique, un groupe aromatique, un groupe hétérocyclique, ou un groupe d'acide carboxylique ou un dérivé ou un sel de celui-ci, à condition que le groupe $R_1$ puisse former un cycle avec un atome de carbone qui est $\alpha$, $\beta$ ou $\gamma$ par rapport au groupe $-CO_2X$ ou puisse représenter un point de réticulation ;
$R_2$ représente indépendamment un atome d'hydrogène, un groupe aliphatique, un groupe alicyclique, un groupe aromatique, un groupe hétérocyclique, un groupe contenant un alcène, un groupe contenant un éther, un groupe contenant un ester, un groupe contenant un sulfure, un groupe contenant un imide, un groupe contenant un sulfonate ou un sulfonique, un groupe contenant un phosphonate ou un phosphonique, un groupe contenant un nitrile, un groupe contenant un nitro, un groupe contenant un hydroxyle, ou un groupe contenant un halogénure, à condition que le groupe $R_2$ puisse former un cycle avec un atome de carbone auquel le groupe $R_2$ est attaché ou à un atome de carbone adjacent ou puisse représenter un point de réticulation ;
$R_3$ représente indépendamment un atome d'hydrogène, un groupe aliphatique, un groupe alicyclique, un groupe aromatique, un groupe hétérocyclique, un groupe contenant un alcène, un groupe contenant un éther, un groupe contenant un ester, un groupe contenant un sulfure, un groupe contenant un imide, un groupe contenant un sulfonate ou un sulfonique, un groupe contenant un phosphonate ou un phosphonique, un groupe contenant un nitrile, un groupe contenant un nitro, un groupe contenant un hydroxyle, ou un groupe contenant un halogénure, à condition que le groupe $R_2$ puisse former un cycle avec un atome de carbone auquel le groupe $R_2$ est attaché ou à un atome de carbone adjacent ou puisse représenter un point de réticulation ;

$R_4$ représente indépendamment un atome d'hydrogène, un groupe aliphatique, un groupe alicyclique, un groupe aromatique, un groupe hétérocyclique, un groupe contenant un alcène, un groupe contenant un éther, un groupe contenant un ester, un groupe contenant un sulfure, un groupe contenant un imide, un groupe contenant un sulfonate ou un sulfonique, un groupe contenant un phosphonate ou un phosphonique, un groupe contenant un nitrile, un groupe contenant un nitro, un groupe contenant un hydroxyle, ou un groupe contenant un halogénure, à condition que le groupe $R_2$ puisse former un cycle avec un atome de carbone auquel le groupe $R_2$ est attaché ou à un atome de carbone adjacent ou puisse représenter un point de réticulation ;
$R_5$ représente indépendamment un atome d'hydrogène, un groupe aliphatique, un groupe alicyclique, un groupe aromatique, un groupe hétérocyclique, un groupe contenant un alcène, un groupe contenant un éther, un groupe contenant un ester, un groupe contenant un sulfure, un groupe contenant un imide, un groupe contenant un sulfonate ou un sulfonique, un groupe contenant un phosphonate ou un phosphonique, un groupe contenant un nitrile, un groupe contenant un nitro, un groupe contenant un hydroxyle, ou un groupe contenant un halogénure, à condition que le groupe $R_2$ puisse former un cycle avec un atome de carbone auquel le groupe $R_2$ est attaché ou à un atome de carbone adjacent ou puisse représenter un point de réticulation ;
X représente indépendamment un atome d'hydrogène, un groupe alkyle, un groupe aminé ou un atome de métal ;
a représente indépendamment un entier allant de 1 à 1000 ;
b représente indépendamment un entier allant de 1 à 1000 ;
c représente indépendamment un entier allant de 1 à 1000 ;
d représente indépendamment un entier allant de 1 à 1000 ; et
e représente indépendamment un entier allant de 1 à 1000.

**9.** Le procédé selon l'une quelconque des revendications précédentes, comprenant :

la mise en contact du copolymère amphiphile avec le lait de chaux comprenant de l'hydroxyde de calcium et la réalisation d'une carbonatation, pour obtenir une dispersion du carbonate de calcium modifié en surface ; et
le retrait du milieu liquide de la dispersion pour obtenir une poudre du carbonate de calcium modifié en surface.

**10.** Le procédé selon l'une quelconque des revendications précédentes, dans lequel le lait de chaux comprenant de l'hydroxyde de calcium est mis en contact avec une dispersion aqueuse du copolymère amphiphile ou un sel de celui-ci, et /ou comprenant en outre la mise en contact du lait de chaux comprenant de l'hydroxyde de calcium avec au moins un agent de modification de surface supplémentaire, et / ou comprenant en outre la mise en contact du lait de chaux comprenant de l'hydroxyde de calcium avec au moins un composé d'acide gras ou un sel ou un dérivé de celui-ci.

**11.** Le procédé selon l'une quelconque des revendications précédentes, dans lequel un rapport molaire des sous-unités hydrophiles aux sous-unités hydrophobes dans le copolymère amphiphile va d'environ 20:80 à environ 80:20 et /ou dans lequel un rapport de masse du copolymère amphiphile au carbonate de calcium ou au précurseur de celui-ci va d'environ 0,01:99,99 à environ 5,0:95,0.

**12.** Un carbonate de calcium modifié en surface obtenu par le procédé selon la revendication 1, éventuellement dans lequel :

les particules du carbonate de calcium modifié en surface sont sous la forme d'une structure noyau-coquille comprenant un noyau de carbonate de calcium et
une coquille dérivée du copolymère amphiphile, ladite coquille recouvrant au moins partiellement le noyau de carbonate de calcium ; et
la coquille est ioniquement liée au noyau de carbonate de calcium via les groupes d'acides déprotonés des sous-unités hydrophiles.

**13.** Le carbonate de calcium modifié en surface selon la revendication 12, ayant une caractéristique choisie parmi : (i) une aire de surface BET égale ou supérieure à 30,0 $m^2/g$, (ii) une granulométrie moyenne ($d_{50}$) égale ou inférieure à 0,75 $\mu m$, (iii) une absorption d'humidité égale ou inférieure à 2,0 % et (iv) une teneur en humidité égale ou inférieure à 35 %.

**14.** Une composition, comprenant le carbonate de calcium modifié en surface selon la revendication 12 ou la revendication 13, dans laquelle la composition est choisie dans le groupe constitué par un polymère, une peinture, un revêtement, un agent d'étanchéité et un agent de modification de couleur.

FIG. 1

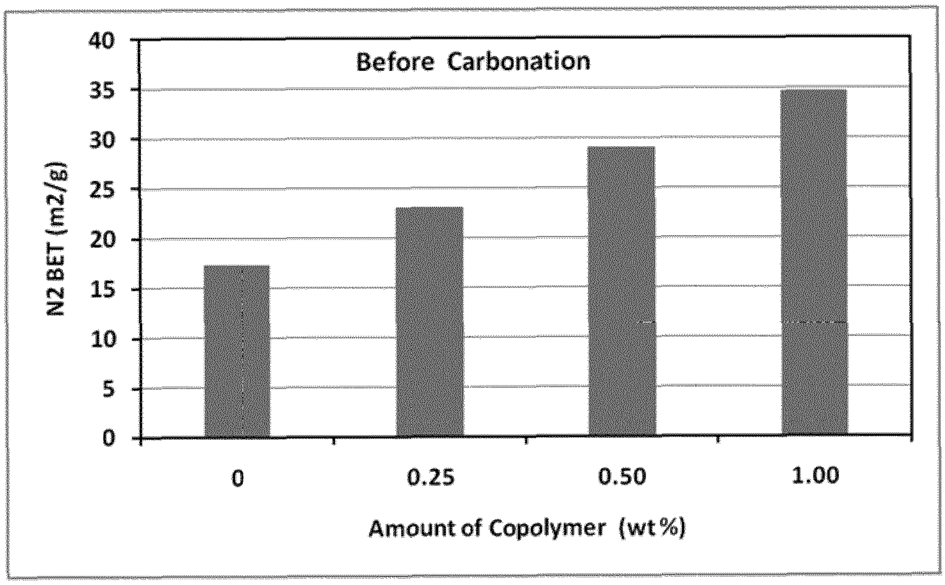
Before Carbonation
N2 BET (m2/g)
40
35
30
25
20
15
10
5
0
0
0.25
0.50
1.00
Amount of Copolymer (wt%)

FIG. 2

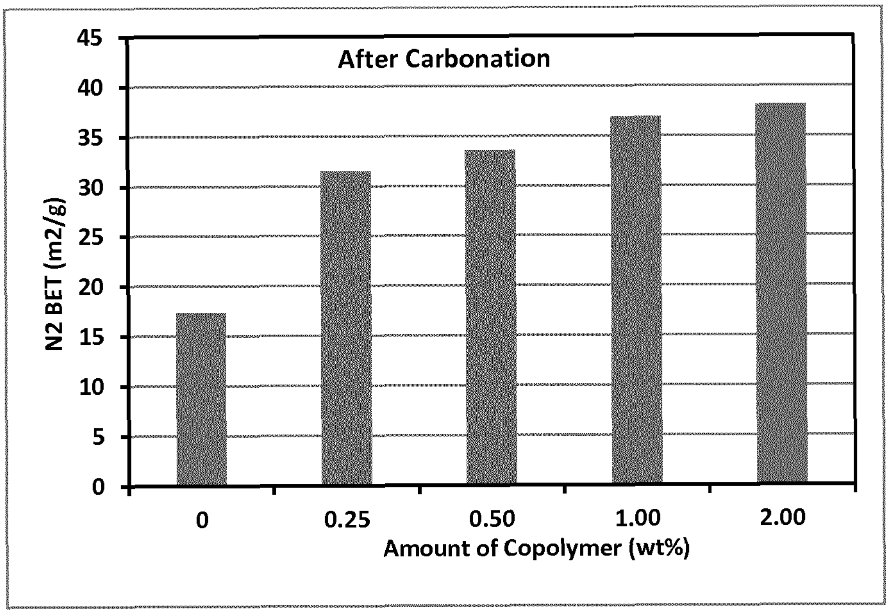
After Carbonation
N2 BET (m2/g)
45
40
35
30
25
20
15
10
5
0
0
0.25
0.50
1.00
2.00
Amount of Copolymer (wt%)

FIG. 3

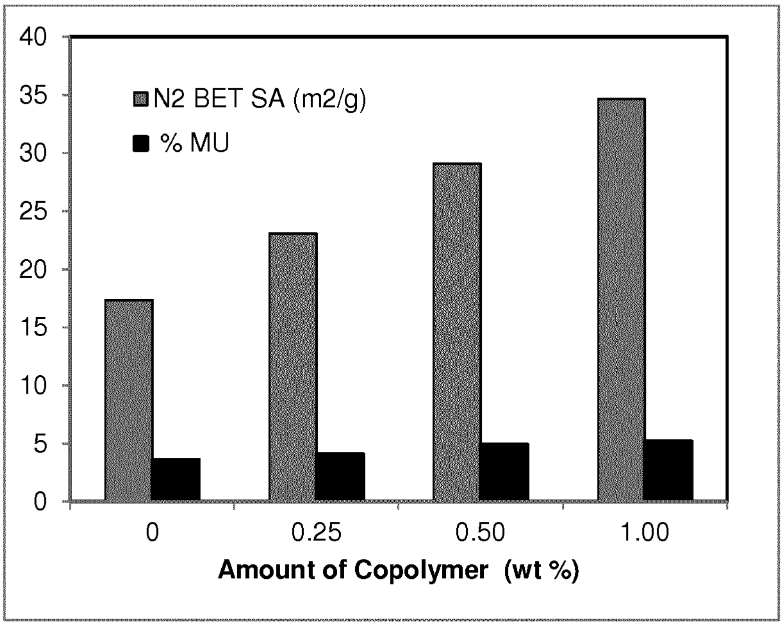
40
35
30
25
20
15
10
5
0
N2 BET SA (m2/g)
% MU
0
0.25
0.50
1.00
Amount of Copolymer (wt %)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018049310 A
- US 2930775 A
- WO 2017184952 A


### Non-patent literature cited in the description


- Classification of Surface-Active Agents by 'HLB. *Journal of the Society of Cosmetic Chemists,* 1949, vol. 1 (5), 311-27
- The HLB System, a Time Saving Guide to Emulsifier Selection. ICI Americas Inc, 1980
- **DAVIES, J.P. ; RIDEAL, E.K.** Interfacial Phenomena. Academic Press, 1963, 371
- **LIN, I.J. ; MARSZALL, L.** *Tenside Det,* 1978, vol. 15, 243
- **O BOEN HO.** *J. Colloid. Interface Sci.,* 1998, vol. 198, 249